# EUROPÄISCHE PATENTSCHRIFT

(11) **EP 0 936 053 B1**
(45) Veröffentlichungstag und Bekanntmachung des Hinweises auf die Patenterteilung: **08.05.2002**
(21) Anmeldenummer: 99101988.6
(22) Anmeldetag: 01.02.1999
(51) Int. Cl.: B29C 47/90, B29C 47/08

(54) **Kurzkaliber für eine Kühl- und Kalibriereinrichtung**
Short calibration element for a cooling and calibration device
Elément court de calibration pour un dispositif de refroidissement et calibrage

(30) Priorität: 16.02.1998 DE 19806202
(43) Veröffentlichungstag der Anmeldung: 18.08.1999
(73) Patentinhaber: Veka AG, 48324 Sendenhorst (DE)
(72) Erfinder: Topp, Alfons, 48317 Drensteinfurt (DE); Scharmann, Karl-Heinz, 59229 Ahlen (DE)
(74) Vertreter: Hoffmeister, Helmut, Dr. Dipl.-Phys.

(56) Entgegenhaltungen:
- EP-A- 0 207 064
- EP-A- 0 534 353
- US-A- 5 626 807

## Beschreibung

Die Erfindung betrifft eine Vorrichtung zur Kurzkalibrierung für eine Kühl- und Kalibriereinrichtung einer Anlage zur Fertigung von Kunststoffhohlprofilen, die aufweist,
- einen Kurzkaliberkörper;
- eine Profilquerschnittsausnehmung, die in den Kurzkaliberkörper eingebracht ist und durch die das Kunststoffhohlprofil hindurchgezogen wird, und
- wenigstens einen Kalibrierungskörper, der in die Profilquerschnittsausnehmung wenigstens teilweise hineinragt und der das Kunststoffhohlprofil wenigstens teilweise hinterfaßt.

Eine Anlage zur Fertigung von Extrusions-Kunststoffteilen umfaßt u.a. Einfülltrichter, Extruder, Profilwerkzeug, Stützblock, Kühl- und Kalibriereinrichtung, Profilabzug, Temperstrecke, Vakuumanlage, Rollenbahn und Stapeleinrichtung. Während in der Rohrproduktion verhältnismäßig einfache Werkzeuge und eine Kaliberstrecke ausreichend sind, erfordern Fensterprofile als Mehrkammerprofile komplizierter Gestalt einen hohen Aufwand für Vieldorn- und Vieldornhalter-Spezialwerkzeuge, Mehrfachkalibrier- und ggf. noch zusätzliche Temperierstrecken zum Spannungsausgleich. Bis zur Stapeleinrichtung sind Reibungskräfte von 10-100 kN zu überwinden (vgl. SAECHTLING, Hansjürgen: Kunststoff-Taschenbuch, 25.Aufl.: Carl Hanser Verlag München Wien, 1992, S. 174- 178).

Bei einer aus der US-PS 5 626 087 bekannten Kühl- und Kalibriereinrichtung sind in einem langgestreckten Behältnis als Kalibriervorrichtungen Kurzkaliber untereinander beabstandet angeordnet. Jedes Kurzkaliber ist etwa 20 mm dick und weist eine Profilquerschnittsausnehmung auf, durch die der Fensterprofilstrang hindurchgezogen wird. In die Profilquerschnittsausnehmung ragen als Teile des Kalibers Kalibrierungskörper hinein, die Bereiche des Profils hinterfassen. Wegen der auftretenden Reibungskräfte schleift beim Kühlen und Kalibrieren des Profils der teilweise noch weiche Kunststoff des Fensterprofilstrangs die Kalibrierungskörper ab, so daß sie verschleißen und erneuert werden müssen.

Hierfür muß die Anlage angehalten werden, das entsprechende Kurzkaliber herausgenommen und durch ein intaktes ersetzt werden. Die Instandsetzung wird so vorgenommen, daß der nicht mehr maßhaltige Kalibrierungskörper des Kurzkalibers herausgeschnitten und ein Rohling eingeschweißt wird. Dabei kann sich das Kurzkaliber verziehen und nicht mehr maßhaltig sein. Auch wenn einschließlich des Nacharbeitens der Material- und Zeitaufwand nicht ganz so hoch wie bei einem vollständig neuen Kurzkaliber sind, muß die Anlage eine nicht unerhebliche Zeit außer Betrieb bleiben. Hierdurch entstehen Einnahmeverluste durch Produktionsausfall. Darüber hinaus sind das Einschweißen des Rohlings und dessen Nachbearbeitung kompliziert.

Es stellt sich damit die Aufgabe, eine Vorrichtung zur Kalibrierung für eine Kühl- und Kalibrierungseinrichtung der eingangs genannten Art so weiter zu entwickeln, daß die Kalibrierungskörper maßhaltig und kostengünstig herstellbar sind und einfach ausgewechselt werden können.

Erfindungsgemäß wird diese Aufgabe durch die Merkmale des Anspruches 1 gelöst.

Die mit der Erfindung erzielten Vorteile bestehen insbesondere darin, daß der Verriegelungskörper durch die eingebrachten Verriegelungsausnehmungen für das schnelle Auswechseln der abgeschliffenen und damit nicht mehr intakten Verriegelungskörper vorgesehen ist. Dabei können verschiedene Verriegelungsmaßnahmen vorgesehen sein.

Vorzugsweise wird in die Verriegelungsausnehmung der Verriegelungsfußkörper ein Verriegelungskörpers eingeschoben und mit Hilfe des Bolzenelementes, der mit einem Hammer in die Bolzenausnehmung eingeschlagen wird, festgelegt. Hierbei spreizt der Verriegelungsfußkörper an der Schlitzausnehmung auseinander und verklemmt sich in der Verriegelungsausnehmung.

Für die Fertigung ragt nun wieder ein intakter Kalibrierkörper in die Profilquerschnittsausnehmung hinein und sorgt dafür, daß das durchlaufende Kunststoffhohlprofil maßgerecht kalibriert wird. Ein wesentlicher Vorteil ist, daß die Verriegelungskörper vollständig und vor allen Dingen maßgenau außerhalb des Kalibrierkörpers angefertigt werden können.
Ein weiterer, sich aus Anspruch 2 ergebender Vorteil besteht darin, daß das Verriegelungsbolzenelement bei dem wieder abgeschliffener Kalibrierkörper aus der Bolzenaufnahmeausnehmung herausgetrieben und anschließend in kürzester Zeit ein neuer Verriegelungskörper wieder eingesetzt werden kann. Hierdurch reduziert sich die Produktionsunterbrechung auf ein Mindestmaß. Darüber hinaus wird der Kaliberkörper, in den der Verriegelungskörper eingesetzt wird, nicht verzogen, so daß die Profilquerschnittsausnehmung unverändert erhalten bleibt.

Das Verriegelungsbolzenelement kann von seinem Bolzenanfang zu seinem Bolzenende konisch ansteigend ausgebildet sein. Hierdurch ist ein Verkeilen des Verriegelungsbolzenelements in der Bolzenaufnahmeausnehmung des Verriegelungsfußkörpers gewährleistet. Darüber hinaus ist gesichert, daß sich das Verriegelungsbolzenelement nicht von allein während des Kalibier- und Kühlungsvorgangs lösen kann.

Der Verriegelungsfußkörper kann als ein axialsymmetrisches gleichschenkliges Trapez ausgebildet sein, an dessen kürzerer Grundseite der Kalibrierkörper angeordnet sein kann. Hierdurch ist ein paß- und maßgenaues Einsetzen des Verriegelungskörpers gewährleistet. Bereits das Einführen des trapezförmigen Verriegelungsfußkörpers in die gleichfalls trapezförmig ausgebildete kompatible Verriegelungsausnehmung sorgt für einen sicheren Halt des Verriegelungskörpers, ohne daß er mit Hilfe des Verriegelungsbolzenelements festgesetzt wird.

Die Schlitzausnehmung kann aus einer Basisschlitz- und einer Kaliberkörperausnehmung bestehen. Die Kaliberkörperausnehmung kann in der Symmetrieachse von der größeren Grundseite des trapezförmigen Verriegelungsfußkörpers bis in die Bolzenaufnahmeausnehmung hineinreichen. Die Kaliberkörperausnehmung kann in Weiterführung der Symmetrieachse von der Bolzenaufnahmeausnehmung über die kürzere Grundseite des Verriegelungsfußkörpers hinweg wenigstens teilweise in den Kalibrierkörper eingebracht sein. Hierdurch wird gesichert, daß sich der Verriegelungsfußkörper ohne Abbrechen am Übergang vom Verriegelungsfußkörper zum Kalibrierkörper bei eingeschlagenem Verriegelungsbolzenelement in der Verriegelungsausnehmung verschieben kann.

Der Kalibrierkörper kann einen Körperkopf aufweisen, der den Kalibrierungsaufgaben angepaßt ist. Er kann deshalb im Querschnitt beliebig, insbesondere rechteckförmig, T-förmig, umgekehrt T-förmig oder pilzförmig ausgebildet sein. Hierbei kann die Symmetrieachse des Körperkopfs in Verlängerung oder beabstandet links oder rechts von der Symmetrieachse des Verriegelungsfußkörpers angeordnet sein. Wesentlich ist, daß hierdurch ein Kurzkaliberkörper mit einer bereits vorhandenen Profilquerschnittsausnehmung hinsichtlich der Kalibrierung geändert werden kann, denn für die unterschiedlichsten Körperkopf-Formen steht immer ein und derselbe Verriegelungsfußkörper zur Verfügung, der in einer kompatiblen Verriegelungsausnehmung festgelegt werden kann. Vor allem bei der Herstellung des Werkzeuges lassen sich durch eine entsprechende Einbringung der Verriegelungsausnehmungen an ausgewählten Stellen universelle Kurzkaliberkörper herstellen.

Hierdurch kann der Aufwand für die Lagerung und Bevorratung von Kurzkaliberkörpern reduziert werden. Wird nämlich im Laufe der Produktionszeit nicht nur der Kalibrierkörper, sondern auch der gesamte Kurzkaliberkörper wenigstens teilweise verschlissen, läßt sich dieser schnellstens durch einen anderen ersetzen. Das Ersetzen der Kurzkaliberkörper durch einen neuen wird dadurch erleichtert, daß der Kurzkaliberkörper geteilt aufgebaut sein kann. Er kann wenigstens aus zwei Kurzkaliberteilkörpern bestehen. Das Ersetzen verschlissener Verriegelungskörper durch neue vorgefertigte der beschriebenen Weise reduziert ganz wesentlich die Anzahl der Kurzkaliberteilkörper. Da in das Material, aus dem die Kurzkaliberteilkörper gefertigt sind, nicht mehr die herkömmlichen Kalibrierkörper maß- und lagegenau eingearbeitet werden müssen, sondern anstelle dessen nur immer gleichgeformte Verriegelungsausnehmungen eingeformt zu werden brauchen, vereinfachen und reduzieren sich wesentlich die Arbeiten bei der Herstellung der einzelnen Kurzkaliberteilkörper.

Das Verriegelungsbolzenelement und Bolzenaufnahmeausnehmung können im Querschnitt kreisförmig ausgebildet sein. Auch andere geometrische Konfigurationen, wie eine Ellipse, ein Dreieck oder ein anderes Viereck sind möglich. Die kreisförmige Ausbildung des Verriegelungsbolzenelements hat den Vorteil, daß handelsübliche Bolzen verwendet werden können.

Die Kurzkaliberteilkörper, die Verriegelungskörper und das Verriegelungsbolzenelement können aus einem nichtrostenden, chromhaltigen Stahl hergestellt sein. Auch andere nichtrostende Stahlsorten, die sich für die Herstellung von Kunststoffhohlprofil eignen, sind einsetz- und verwendbar.

Vorzugsweise ist ein Verfahren zur Herstellung von Verriegelungskörpern dadurch gekennzeichnet, daß
A) in eine Metallplatte, deren Dicke der Länge Verriegelungskörper entspricht, beabstandet untereinander Startbohrungen eingebracht werden;
B) in eine der Startbohrungen ein Draht eingeführt und im Drahterosinsverfahren mit einer numerisch gesteuerten Drahterosionsmaschine aus der Metallplatte wenigstens ein Verriegelungskörper ausgeschnitten wird.

Die mit dem Verfahren der Erfindung erzielten Vorteile bestehen insbesondere darin, daß die Verriegelungskörper aus der Metallplatte maß- und paßgenau ausgeschnitten werden können. Die Maße werden bis auf ein Hundertstel genau eingehalten. Hierdurch erübrigt sich ein Nacharbeiten durch Schleifen oder andere spanabhebende Verfahren.

Im Verfahrensschritt B) können die Verriegelungskörper so ausgeschnitten werden, daß eine eine Sollbruchstelle ausbildende Brücke den jeweiligen Verriegelungskörper mit der Metallplatte verbindet. Hierdurch wird gesichert, daß die Maschine ohne Stop alle Teile fertigen kann und verhindert, verhindert, daß die ausgeschnittenen Verriegelungskörper lose im Herstellungsbehälter liegen. Nach dem Verfahrensschritt B) können die Verriegelungskörper dann an der Sollbruchstelle von der Metallplatte gelöst werden. Hierdurch wird erreicht, daß sämtliche verriegelungskörper aus dem Behandlungsbehälter genommen und an einem eigens dafür vorgesehenen Platz aus der Metallplatte für ein Bevorraten herausgeschlagen werden können.

Das Drahterosionsverfahren an sich ist bekannt. Hierbei wird eine gewünschte Kontur eines Durchbruchs durch die Bewegung des auf einem Kreuztisch mit numerisch gesteuerten Antrieben aufgespannten Werkstücks erreicht. Die Drahterosionsmaschine besteht aus einem Gestell mit Drahtführungen, einem Drahtantrieb und einem auf einem Kreuztisch angeordneten Arbeitsbehälter mit den Befestigungsmöglichkeiten für das Werkstück. Das Drahterosionsverfahren ist vorwiegend auf die Erzielung einer hohen Schnittrate ausgerichtet. Der Verschleiß des eingesetzten Drahtes spielt nur unter dem Gesichtspunkt des Drahtbruchs ein Rolle, da die Werkzeugelektrode laufend erneuert wird. Die Impulszeiten liegen im Bereich unter 5 Mikrosekunden, während die Höhe des Entladestroms in Abhängigkeit vom verwendeten Durchmesser bis zum 200 Ampere betragen kann. Anwendungsschwerpunkte für das Draherosionsverfahren liegen bei der Herstellung von Schnittwerkzeugen, Extrudier- und Strangpreßwerkzeugen sowie Schablonen und Lehren (vgl. HIERSIG, Heinz, M.: Lexikon Produktionstechnik, Verfahrenstechnik, VDI-Verlag GmbH, Düsseldorf, 1995, S. 913 bis 914).

Die Verwendung des Drahterosionsverfahrens zur Herstellung der verriegelungskörper wird aufgrund der bisher praktizierten Reparaturtechnologien nicht nahegelegt. Vor allem das Ausschneiden einer Vielzahl von Verriegelungskörpern aus einer Metallplatte sichert die mit dem Einsatz der Verriegelungskörper verbundenen Vorteile für eine schnellstmögliche und paßgenaue Fertigung dieser Teile.

Ein Ausführungsbeispiel der Erfindung ist in der Zeichnung dargestellt und wird im folgenden näher beschrieben. Es zeigen:
- Fig. 1: eine Anlage zur Herstellung von Kunststoffhohl profilen in schematischer Darstellung in einer Seitenansicht;
- Fig. 2: ein Kurzkaliber ohne Verriegelungskörper für eine Kühl- und Kalibriereinrichtung einer Anlage gemäß Fig. 1 in einer schematischen, perspektivischen Darstellung,
- Fig. 3a: einen Verriegelungskörper für einen Kurzkaliberkörper gemäß Fig. 2 in einer schematischen, perpektivischen Darstellung;
- Fig. 3b: ein Verriegelungsbolzenelement für einen Verriegelungskörper gemäß Fig. 3a in einer schematischen, perspektivischen Darstellung;
- Fig. 4: einen Verriegelungskörper gemäß Fig. 3a mit teilweise eingesetztem Verriegelungsbolzenelement gemäß Fig. 3b in einer schematischen, perspektivischen Darstellung;
- Fig. 5: ein Verriegelungsbolzenelement gemäß Fig. 3a in einer schematisch dargestellten Vorderansicht;
- Fig. 6: einen Schnitt durch ein Verriegelungsbolzenelement gemäß Fig. 5 entlang der Linie VI-VI;
- Fig. 7a: einen mit Verriegelungskörpern zu einem Kurzkaliber ausgerüsteten Kurzkaliberkörper in einer schematisch dargestellten Vorderansicht;
- Fig. 7b: ein durch ein Kurzkaliber gemäß Fig 7a hindurchgeführtes Kunststoffhohlprofil in einer schematisch dargestellten Vorderansicht;
- Fig. 8: Verriegelungskörper mit unterschiedlichen Formen von Körperköpfen für deren Kalibrierkörper;
- Fig. 9: eine Metallplatte mit einerodierten Verriegelungskörpern gemäß Fig. 3a, 5 und 6;
- Fig. 10: Verriegelungskörper mit unterschiedlichen Körperkopf-Formen, die denen in Fig. 8 dargestellten entsprechen und die sich in die Metallplatte gemäß Fig. 9 einerodieren lassen und
- Fig. 11: einen vergrößerten Teilausschnitt von einer Metallplatte gemäß Fig. 9.

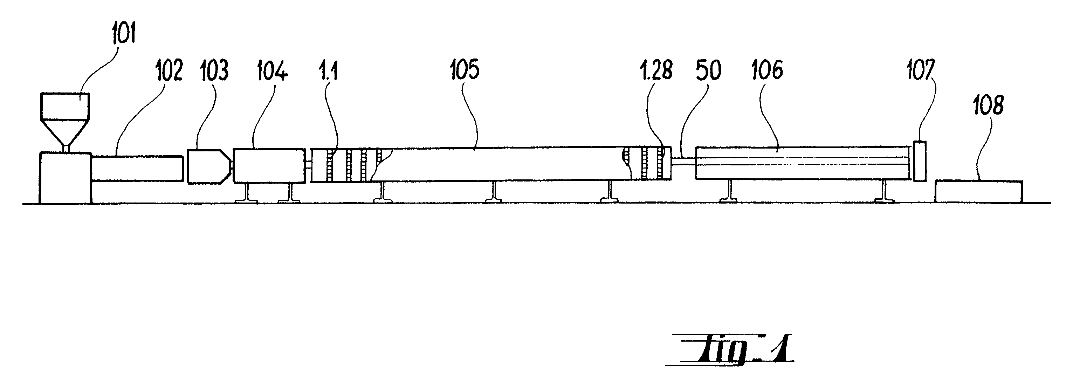

Eine in Fig. 1 gezeigte Anlage zur Herstellung von Kunststoffhohlprofilen 50 besteht aus einem Einfülltrichter 101, der über einem Extruder 102 angeordnet und über den der Extruder mit Kunststoff-Granulat zu beschicken ist. Am Extruder 102 befindet sich ein Profilwerkzeug 103. Hinter dem Profilwerkzeug 103 befindet sich eine Kalibrier- und Vorkühleinrichtung 104, an die sich eine Kühl- und Kalibriereinrichtung 105 anschließt. Hinter der Kühl- und Kalibriereinrichtung 105 steht eine Transporteinrichtung 106, an die sich eine Schneideinrichtung 107 und danach eine Stapeleinrichtung 108 anschließt.

Die Kühl- und Kalibriereinrichtung 105 ist ein im wesentlichen langgestreckter Quader-Hohlkörper, zu dem eine Vielzahl von Kühlwasseranschlüssen und -ableitungen führt. Im Inneren der Kühl- und Kalibriereinrichtung 105 sind achtundzwanzig Kurzkaliber 1.1, ..., 1.28 beabstandet untereinander angeordnet. Die Kurzkaliber 1.1, ... haben die Aufgabe, das Kunststoffhohlprofil 50 während des Kühlvorganges, wie weiter unten im Detail erläutert wird, an ausgewählten Stellen zu kalibrieren, d.h., dessen vorgegebene Innen- und Außenabmessungen zu gewährleisten.

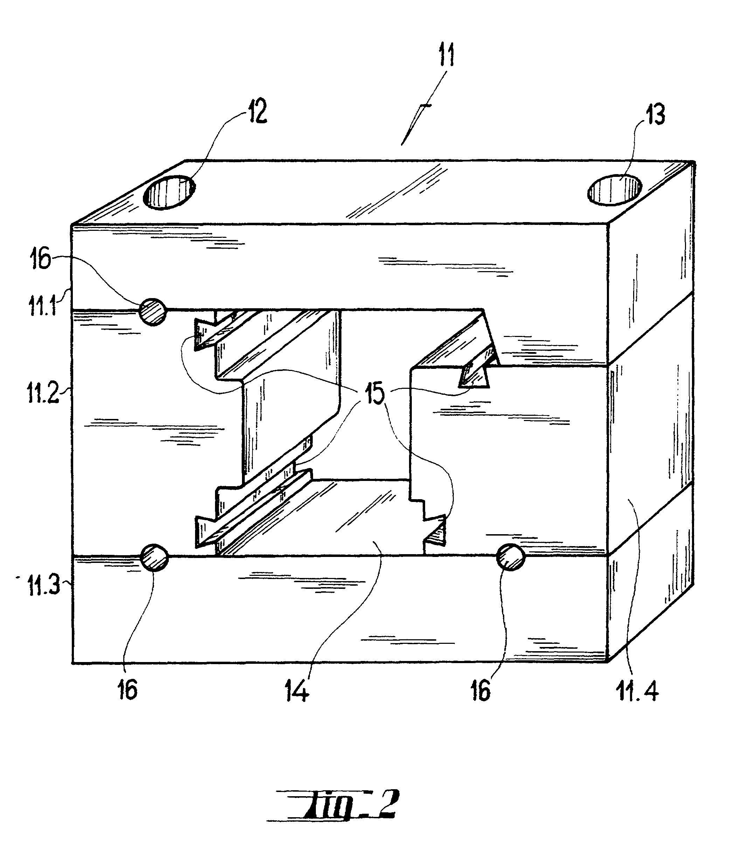

Jedes der Kurzkaliber 1.1, ... 1.28 weist einen Kurzkaliberkörper 11 auf, wie er in Fig. 2 gezeigt ist. Er besteht aus vier Kurzkaliberteilkörpern 11.1, 11.2, 11.3, 11.4. In den Kurzkaliberkörper 11 ist eine Profilquerschnittsausnehmung 14 eingebracht, die von der gewünschten Querschnittskonfiguration des Kunststoffhohlprofil 50 bestimmt wird und von den Innenwandungen der vier Kurzkaliberkörper im wesentlichen begrenzt ist. Die Kurzkaliberteilkörper 11.1 und 11.3 weisen gegenüber der Profilquerschnittsausnehmung 14 eine Vorspannung auf, d.h. sie wölben sich etwas in die Profilquerschnittsausnehmung 14 hinein.

Mit 16 sind Kühlausnehmungen bezeichnet, durch die Kühlwasser in der Kühl- und Kalibriereinrichtung 105 temperaturausgleichend zwischen den einzelnen Kurzkalibern 1.1, ... 1.28 hindurchtreten kann. Die Anzahl der Kühlausnehmungen ist nicht auf die Anzahl und die Stellen wie in Fig. 2 gezeigt beschränkt. Die einzelnen Kurzkaliberteilkörper 11.1 bis 11.4 sind von sich gegenüberliegenden Schraubausnehmungen 12, 13 durchzogen und werden durch entsprechend ausgebildete Schraubverbindungsmittel kraftschlüssig zusammengehalten.

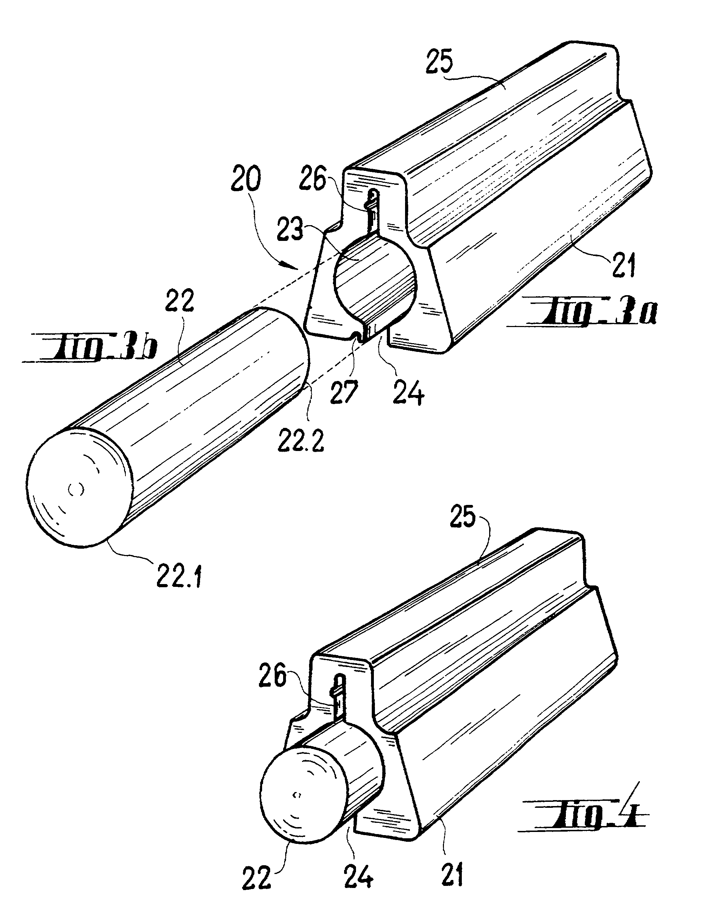

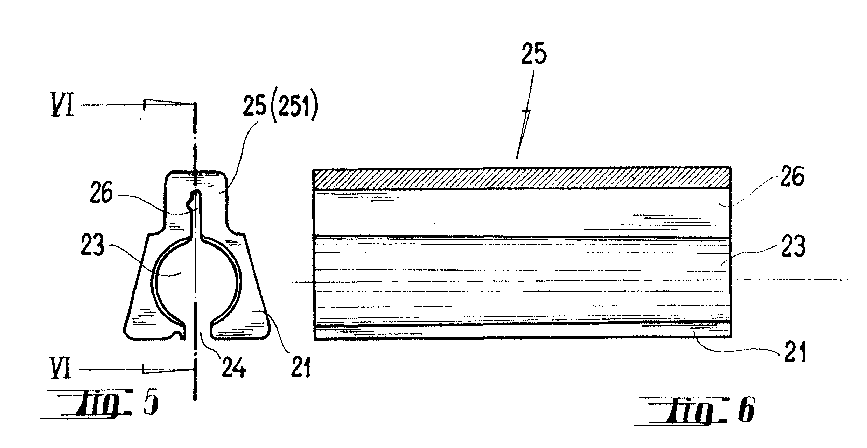

Erfindungswesentlich ist es, daß im Bereich der Profilquerschnittsausnehmung 14 Verriegelungsausnehmungen 15, in diesem Fall in die Kurzkaliberteilkörper 11.2 und 11.4, eingebracht sind. Die Verriegelungsausnehmungen 15 sind im Querschnitt schwalbenschwanzförmig, also gleichschenklige Trapeze. In jedem gleichschenkligen Trapez sind die Winkel, die an derselben Grundseite anliegen, gleich. Jedes gleichschenklige Trapez ist axialsymmetrisch; die Symmetrieachse steht senkrecht auf dem Mittelpunkt der Grundseite des gleichschenkligen Trapezes. Die größere Grundseite des Trapezes stellt die gerade Grundfläche der Verriegelungsausnehmung 15 und die kleinere die gegenüberliegende Grundseite die offene Abschlußöffnung der Verriegelungsausnehmung 15 dar. Die Verriegelungsausnehmungen 15 dienen zur Aufnahme von Verriegelungskörpern, die im Folgenden beschrieben sind. Diese weiteren wesentlichen Elemente des Erfindungsgegenstandes sind in den Figuren 3a, 3b und 4 dargestellt.

Fig. 3a zeigt einen Verriegelungskörper 20. Er weist einen Verriegelungsfußkörper 21 auf, der im Umriß als ein gleichschenkliges Trapez ausgebildet ist. In den Verriegelungsfußkörper 21 ist eine im Querschnitt zylinderförmig ausgebildete Bolzenaufnahmeausnehmung 23 eingebracht. Die Bolzenaufnahmeausnehmung 23 durchzieht den gesamten Verriegelungsfußkörper 21 axial. Sie kann aber auch so ausgebildet sein, daß sie nur einen Teil der Achslänge des Verriegelungsfußkörpers 21 umfaßt. Von der größeren Grundseite des trapezförmigen Verriegelungsfußkörpers 21 her ist bis in die Bolzenaufnahmeausnehmung 23 reichend in der Symmetrieachse eine Basisschlitzausnehmung 24 eingebracht. Die Basisschlitzausnehmung 24 erstreckt sich über die gesamte Länge der Bolzenaufnahmeausnehmung 23. Es ergeben sich damit zwei Schenkel des Verriegelungsfußkörpers 21.

An der kürzeren Grundseite des Trapezes setzt sich der Verriegelungsfußkörper 21 einstückig in einem Kalibrierkörper 25 fort. Der Kalibrierkörper 25 ist quaderförmig ausgebildet und weist eine geringere Breite als die kleinere Grundseite des trapezförmigen Verriegelungsfußkörpers 21 auf. Der Übergang zwischen dem Verriegelungsfußkörper 21 und dem Kalibrierkörper 25 kann eine Hohlkehle, wie in Fig. 3a gezeigt, aufweisen. Anstelle der Hohlkehle kann auch ein scharfer Eckwinkel ausgebildet sein.

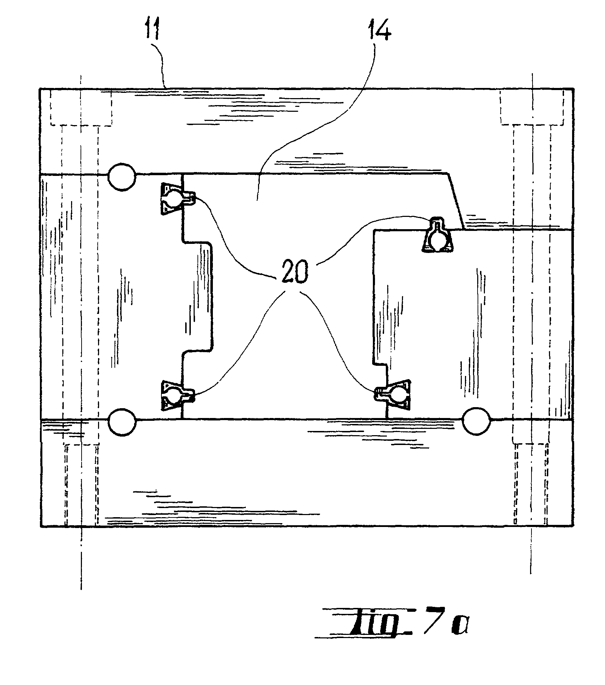

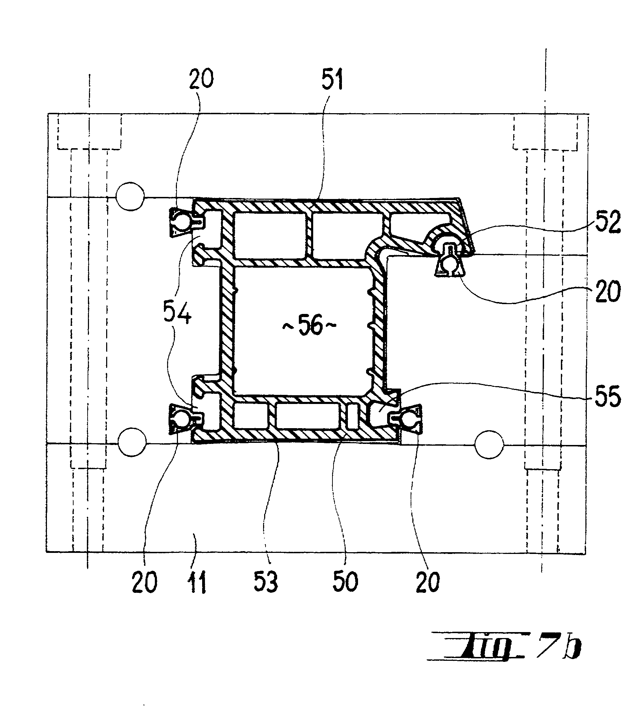

In Verlängerung der Symmetrieachse des Trapezes des Verriegelungsfußkörpers 21 ist ausgehend von der Bolzenaufnahmeausnehmung 23 eine Kalibrierkörperausnehmung 26 in den Kalibrierkörper 25 eingebracht. Die Kalibrierkörperausnehmung 26 erstreckt bis zu zwei Dritteln der Höhe des Kalibrierkörpers 25. Die oberen Schultern des Kalibrierkörpers 25 sind gerundet (vgl. auch Fig. 5 und 6).

Dm den Verriegelungskörper 20 in den Kurzkaliberkörper 11 einsetzen zu können, ist hierfür ein Verriegelungsbolzenelement 22 vorgesehen, das in Fig. 3b dargestellt ist. Das Verriegelungsbolzenelement 22 weist eine im wesentlichen zylindrische Konfiguration auf und ist vom seinem Bolzenanfang 22.1 bis zum Bolzenende 22.2 hin leicht konisch ausgebildet. Dieses Verriegelungsbolzenelement 22 läßt sich in die Bolzenaufnahmeausnehmung 23, wie Fig. 4 zeigt, eintreiben. Hierbei werden die beiden Schenkel des Verriegelungsfußkörpers 21 auseinandergedrückt.

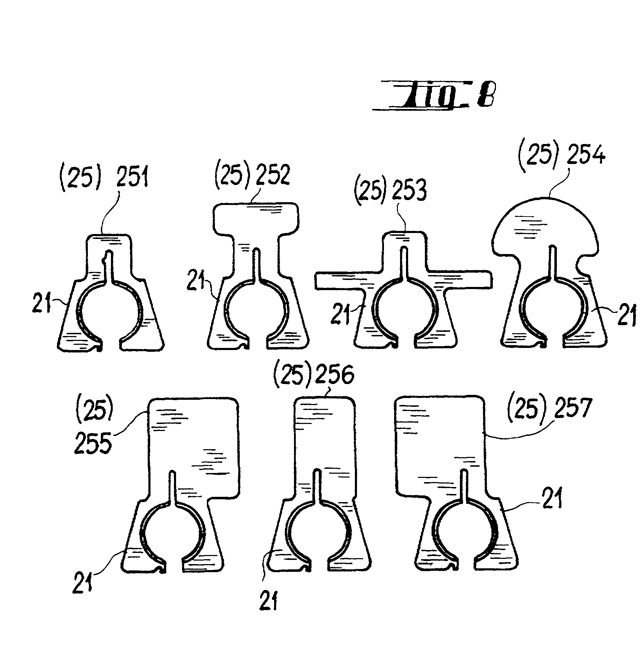

Wie Fig. 7a zeigt, ist in die vier Verriegelungsausnehmungen 15 jeweils ein Verriegelungskörper 20 eingesetzt. Der Verriegelungskörper 20 ist etwa 20 mm lang, etwas kürzer ist das Bolzenelement 22. Genauso breit ist der jeweilige Kurzkaliberteilkörper 11.1, ... 11.3.

Beim Einsetzen des Verriegelungskörpers 20 wird zuerst der Verriegelungsfußkörper 21 in die Verriegelungsausnehmung 15 von Hand eingeschoben. Nachdem der Verriegelungsfußkörper 21 lagegerecht in der Verriegelungsausnehmung 15 positioniert ist, wird mit einem Hammer das Verriegelungsbolzenelement 22 vollständig eingetrieben. Durch die konische Form des Verriegelungsbolzenelements 22 legt sich der Verriegelungsfußkörper innig an die Seitenwandungen der Verriegelungsausnehmung 15 und preßt sich dort fest. Dadurch, daß die Bolzenaufnahmeausnehmung 23 und die darüberliegende Kaliberkörperausnehmung 26 in der Symmetrieachse des trapezförmigen Verriegelungsfußkörpers 21 liegen, verteilen sich die Kräfte gleichmäßig auf die Schenkel des Verriegelungsfußkörpers und des Kalibrierkörpers 25, ohne daß die Schenkel des Verriegelungsfußkörpers 21 abbrechen.

Fig. 7b zeigt, wie sich das Kunststoffhohlprofil 50 durch die Profilquerschnittsausnehmung 14 schiebt. Das Kunststoffhohlprofil 50 weist einen Blendrahmen 51 auf, dem ein Sichtrahmen 53 gegenüberliegt. Diese werden durch Querrippen gegenüber einer versteiften Hohlkammer 56 untereinander beabstandet. An der rechtsseitig überhängenden Spitze des Blendrahmens 51 befindet sich eine Dichtungsaufnahmenut 52. Mit 54 sind zwei sich gegenüberliegende Längsnuten und mit 55 eine weitere Längsnut bezeichnet.

Die eingesetzten Verriegelungskörper 20 haben die Aufgabe, während des Kühlvorganges bei noch weichem Kunststoff des extrudierten Profilstranges die später sichtbaren Blend- und Sichtrahmen 51, 53 gerade zu halten. Darüber hinaus wird auch dafür gesorgt, daß die mit 52, 54 und 55 bezeichneten Nuten auch während des Abkühlvorganges paßgenau erhalten bleiben.

In Fig. 8 sind analog zu dem anhand der Fig. 3a bis 6 beschriebenen Verriegelungskörper 25 andere Ausführungsformen dargestellt. Die Körperköpfe mit verschiedenen Querschnitten sind hier mit 251, 252 ff bezeichnet. Die erste Figur mit dem Körperkopf 251 entspricht dem Ausführungsbeispiel der Fig. 5.

Abweichend davon weist der Kalibrierkörper 25 einen Körperkopf 252 auf, der im Querschnitt T-förmig gestaltet ist. Hierbei ist der Körperkopf 252 mit einem waagerechten T-Balken ausgestattet.

Als weitere Ausführungsform ist ein Körperkopf 253 für den Kalibrierkörper 25 gezeigt, der eine umgekehrt T-förmige Form hat. Diese Form wird dadurch realisiert, daß sich zu beiden Seiten des Körperkopfes 253 ein in etwa gleichbreiter Steg erstreckt.

Mit 254 ist ein Körperkopf für den Kalibrierkörper 25 gezeigt, der pilzförmig ausgebildet ist. Der Pilzkopf liegt asymmetrisch zur Symmetrieachse des trapezförmigen Verriegelungsfußkörpers 21.

Mit 255 ist ein im Querschnitt rechteckiger Körperkopf für den Kalibrierkörper 25 bezeichnet. Er liegt einseitig rechts neben der Symmetrieachse des Verriegelungsfußkörpers 21. Hierbei ist die linksseitige Hälfte des Körperkopfes 255 genauso weit beabstandet wie der bereits beschriebene Körperkopf 251, ist aber 2,5-mal so hoch. Die rechte Seite des Körperkopfes 255 ist ebenfalls 2,5 mal so hoch, aber 3-mal so breit wie der bereits beschriebene Körperkopf 251, der 1 cm hoch und 1 cm breit ist.

Mit 256 ist ein Körperkopf für den Kalibrierkörper 25 bezeichnet, dessen linke Seite genauso ausgebildet ist wie der des Körperkopfes 255, während die rechte Seite etwa nur doppelt so breit ist, wie die des Köperkopfes 251.

Der letzte der dargestellten Köperköpfe ist mit 257 bezeichnet und ist spiegelbildlich zur Symmetrieachse wie der bereits beschriebene Körperkopf 255 ausgebildet.

Erfindungswesentlich ist, daß trotz unterschiedlicher Konfiguration der Körperköpfe des Kalibrierkörpers, die auf die gezeigten Beispiele nicht beschränkt ist, die Verriegelungskörper 20 immer über den gleichen Verriegelungsfußkörper 21 verfügen. Hierdurch ist es möglich, in eine einmal eingebrachte Verriegelungsausnehmung 15 des Kurzkaliberkörpers unterschiedlich geformte Körperköpfe 251, ... für den Kalibrierkörper 25 einzusetzen.

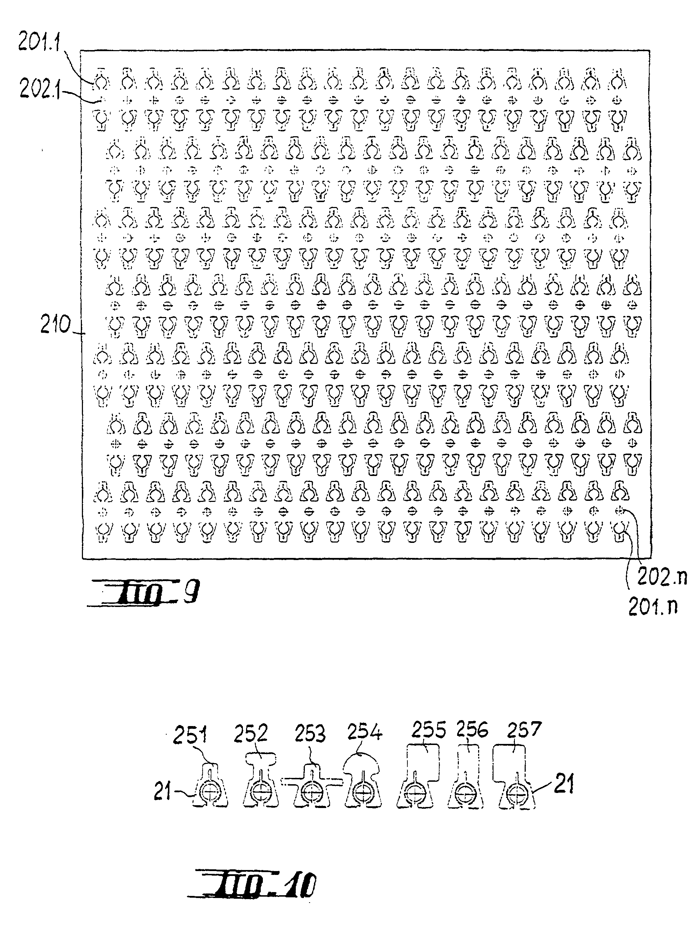

Anhand der Fig. 9 bis 11 wird die Herstellung der einzelnen Verriegelungskörper 20 beschrieben. Mit 210 ist eine Metallplatte bezeichnet, die so dick ist, wie die einzelnen Verriegelungskörper 20 lang sind. Vorzugsweise handelt es sich um einen korrosionsfesten Edelstahl, insbesondere Chromstahl. In die Metallplatte 210 werden beabstandet untereinander Startbohrungen 202.1, ..., 202.n gebohrt. Danach wird die so vorbereitete Metallplatte 210 einer Drahterosionsmaschine zugeführt. Diese besteht aus einem Gestell mit Drahtführungen, einem Drahtantrieb und einem auf einem Kreuztisch angeordneten Arbeitsbehälter mit Befestigungsmöglichkeiten, mit deren Hilfe die Metallplatte 210 dort eingespannt wird. Die Drahterosionsmaschine ist numerisch gesteuert. In dessen Rechner sind die einzelnen Programmschritte für das Ausschneiden der einzelnen Verriegelungskörper 20 eingegeben.

Beim Starten der Drahterosionsmaschine wird im ersten Schritt der Draht durch die Startbohrung 202.1 geführt. Anschließend schneidet der Draht einen Verriegelungskörperschnitt 201.1 aus, der dem des Verriegelungskörpers 20 entspricht. Hierbei wird linksseitig am Verriegelungsfußkörper eine Brücke belassen, die eine Verbindung des ausgeschnittenen Teils zur Metallplatte 210 herstellt. Sind die äußeren Umrandungen geschnitten, fährt der Draht auf der Symmetrieachse in den trapezförmigen Verriegelungsfußkörper 21 hinein und schneidet dort die Basisschlitzausnehmung 24, danach anschließend die Bolzenaufnahmeausnehmung 23 und die ebenfalls in der Symmetrieachse liegende und sich von der Bolzenaufnahmeausnehmung 23 fortsetzende Kalibrierkörperausnehmung 26 heraus.

Ist der Verriegelungskörperschnitt 201.1 beendet, wird mit dem nächsten begonnen, bis von der letzten Startbohrung 202.n der letzte Verriegelungskörperschnitt 201.n herausgeschnitten wird. Danach wird die Drahterosionsmaschine abgeschaltet und das im Behälter während der Drahterosion befindliche Wasser abgelassen.

Nachdem die Metallplatte 210 mit sämtlichen Verriegelungskörperschnitten 201.1, ..., 201.n aus dem Behälter herausgenommen worden ist, werden die einzelnen Verriegelungskörperschnitte herausgeschlagen und stehen nun als Verriegelungskörper 20 für den beschriebenen Einsatz zur Verfügung. Beim Herausschlagen wird die Brücke an einer Sollbruchstelle 27, wie in Fig. 3a gezeigt, durchtrennt.

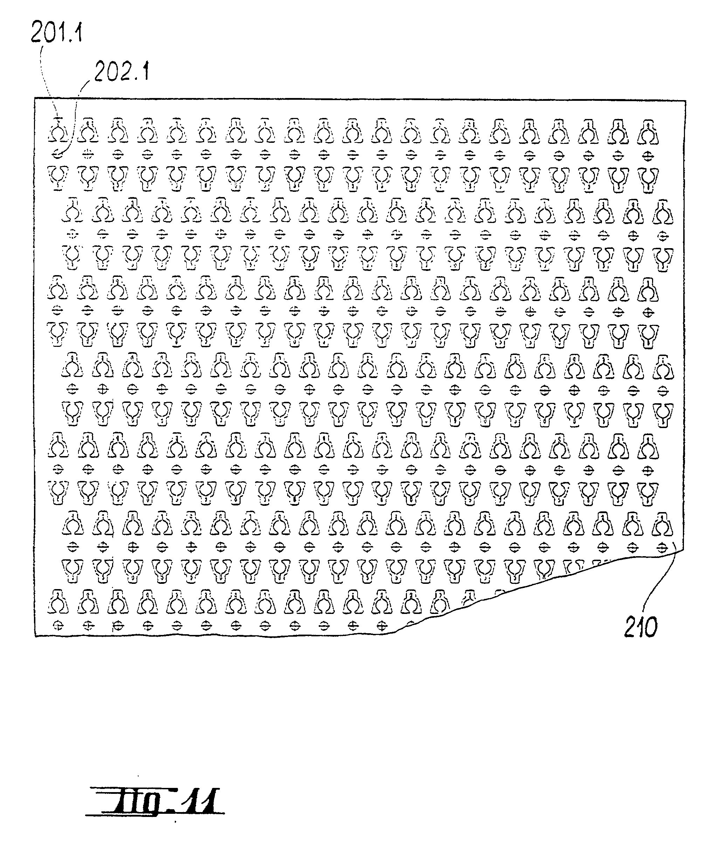

In Fig. 10 sind nochmals die anhand der Fig. 8 beschriebenen Verriegelungskörper mit unterschiedlichen Körperköpfen 251, ..., 257 dargestellt. Durch entsprechende Programmierung lassen sich auch diese Verriegelungskörper mit den dort gezeigten Körperköpfen aus einer einzigen Metallplatte in der beschriebenen Art und Weise herausschneiden. Wesentlich ist, daß die einzelnen Verriegelungskörper 20 nach dem Herausschlagen aus der Metallplatte sofort für einen Einsatz zur Verfügung stehen. Aufgrund der Maßgenauigkeit des Drahterosionsverfahrens, die eine Maßhaltigkeit bis an hundertstel Millimeter genau sichert, erübrigt sich ein Nachbearbeiten der einzelnen Verriegelungskörper 20, um deren Paßgenauigkeit herzustellen. Hierdurch wird ein nicht unerheblicher Zeitaufwand gegenüber einem sonstigen formgerechten Herstellen eingespart.

Während der Herstellung der Kunststoffhohlprofile schleifen beim Durchlauf in der Kühl- und Kalibriereinrichtung 105 die abgestützten Teile des Kunststoffhohlprofiles 50 die einzelnen Verriegelungskörper 20 ab, obwohl diese aus einem nichtrostenden Edelstahl, insbesondere einem chromhaltigen Edelstahl geformt sind. Durch das Abschleifen und Verschleißen sind die in die Profilquerschnittsausnehmung 14 hineinragenden Kalibrierkörper 25 nicht mehr in der Lage, das Kunststoffhohlprofil 50 an den entsprechenden Stellen maßgenau abzustützen und damit zu kalibrieren. Das hat zur Folge, daß der sichtbare Blend- und Sichtrahmen 51, 53 nicht mehr eben ist.

In diesem Fall wird die Anlage angehalten und die Kühl- und Kalibriereinrichtung 105 geöffnet und die Kurzkaliber 1.1, ..., 1.28 werden herausgenommen, deren Kalibrierkörper abgeschliffen sind. Unter Verwendung eines Dorns werden mit wenigen Hammerschlägen die Verriegelungsbolzenelemente 22 aus der Bolzenaufnahmeausnehmung 23 herausgetrieben und der Verriegelungsfußkörper 21 aus der Verriegelungsausnehmung 15 herausgeschoben. Dann wird einer der bereits vorgefertigten, maßgenauen Verriegelungskörper 20 genommen und dessen Verriegelungsfußkörper 21 in die Verriegelungsausnehmung 15 eingeschoben. Der Verriegelungsfußkörper 21 wird, wie bereits beschrieben, mit dem Verriegelungsbolzenelement 21 in der Verriegelungsausnehmung 15 festgelegt. Der Auswechslungsvorgang der einzelnen Verriegelungskörper nimmt nur wenige Minuten in Anspruch, so daß in kürzester Zeit die Anlage gemäß Fig. 1 wieder an- und weitergefahren werden kann. Der Verlust, der sich aus diesem notwendigen Produktionsausfall ergibt, wird auf ein Mindestmaß beschränkt.

Zusammenfassend kann festgestellt werden, daß durch die Umgestaltung der Kurzkaliberkörper 11 und der Verriegelungskörper 20
- die maßgenaue Herstellung eines für den Kalibriervorgang erforderlichen Kalibrierkörpers 25 einfach und schnell durchführbar ist,
- das Ersetzen der einzelnen Verriegelungskörper 20, deren Kalibrierkörper 25 abgeschliffen und nicht mehr maßgenau sind, problemlos möglich ist, und
- der Zeitaufwand für die Herstellung der Verriegelungskörper selbst, deren Einsetzen in den Kurzkaliberkörper und der notwendige Produktionsausfall wirksam, d.h. auf insgesamt 10 bis 25% reduzierbar ist.

### Bezugszeichenliste

- 1.1, ..., 1.28: Kurzkaliber
- 11: Kurzkaliberkörper
- 11.1, 11.2, 11.3, 11.4: Kurzkaliberteilkörper
- 12, 13: Schraubverbindung
- 14: Profilquerschnittsausnehmung
- 15: Verriegelungsausnehmung
- 16: Kühlausnehmung

- 20: Verriegelungskörper
- 21: Verriegelungsfußkörper
- 22: Verriegelungsbolzenelement
- 22.1: Bolzenanfang
- 22.2: Bolzenende
- 23: Bolzenaufnahmeausnehmung
- 24: Basisschlitzausnehmung
- 25: Kalibrierkörper
- 26: Kaliberkörperausnehmung
- 27: Sollbruchstelle

- 50: Kunststoffhohlprofil
- 51: Blendrahmen
- 52: Dichtungsaufnahmenut
- 53: Sichtrahmen
- 54, 55: Längsnut
- 56: Hohlkammer

- 101: Einfülltrichter
- 102: Extruder
- 103: Profilwerkzeug
- 104: Kalibrier- und Vorkühleinrichtung
- 105: Kühl- und Kalibriereinrichtung
- 106: Transporteinrichtung
- 107: Schneideinrichtung
- 108: Stapeleinrichtung

- 201.1, ..., 201.n: Verriegelungskörperschnitt
- 202.1, ..., 202.n: Startbohrung
- 210: Metallplatte

- 251 ff: Körperköpfe

## Patentansprüche

1. Vorrichtung zur Kurzkalibrierung für eine Kühl- und Kalibriereinrichtung (105) einer Anlage zur Fertigung von Kunststoffhohlprofilen (50), welche Vorrichtung aufweist:
- einen Kurzkaliberkörper (11);
- eine Profilquerschnittsausnehmung (14), die in den Kurzkaliberkörper (11) eingebracht ist und durch die ein Kunststoffhohlprofil (50) hindurch gezogen wird, und
- wenigstens einen Kalibrierungskörper (20, 22), der in die Profilquerschnittsausnehmung (14) wenigstens teilweise hineinragt und der das Kunststoffhohlprofil (50) wenigstens teilweise hinterfaßt,
**dadurch gekennzeichnet,**
- **daß** der Kalibrierungskörper aus einem Verriegelungskörper (20) mit einer Schlitzausnehmung (23, 26) und einem Verriegelungsfußkörper (21) und einem sich an den Verriegelungsfußkörper (21) anschließenden Kalibrierkörper (25) ausgebildet ist,
- **daß** in den Kurzkaliberkörper (11) von der Profilquerschnittsausnehmung (14) aus wenigstens eine zum Verriegelungsfußkörper (21) kompatible Verriegelungsausnehmung (15) eingebracht ist und
- **daß** in die Verriegelungsausnehmung (15) der Verriegelungsfußkörper (21) einzusetzen und festzulegen ist.

2. Vorrichtung nach Anspruch 1, **dadurch gekennzeichnet, daß** in den Verriegelungsfußkörper (21) eine Bolzenaufnahmeausnehmung (23) eingebracht ist, in die ein Verriegelungsbolzenelement (22) eintreibbar ist.

3. Vorrichtung nach Anspruch 2, **dadurch gekennzeichnet, daß** das Verriegelungsbolzenelement (22) und die Bolzenaufnahmeausnehmung (23) im Querschnitt kreisförmig ausgebildet sind.

4. Vorrichtung nach Anspruch 2 oder 3, **dadurch gekennzeichnet, daß** das Verriegelungsbolzenelement (22) von seinem Bolzenanfang (22.1) zu seinem Bolzenende (22.2) konisch ansteigend ausgebildet ist.

5. Vorrichtung nach Anspruch 1, **dadurch gekennzeichnet, daß** der Verriegelungsfußkörper (21) als ein axialsymmetrisches gleichschenkliges Trapez ausgebildet ist, an dessen kürzerer Grundseite der Kalibrierkörper (25) angeordnet ist.

6. Vorrichtung nach einem der Ansprüche 1 bis 5, **dadurch gekennzeichnet, daß** die Schlitzausnehmung umfaßt:
- eine Basisschlitzausnehmung (24), die in der Symmetrieachse von der größeren Grundseite des trapezförmigen Verriegelungsfußkörpers (21) bis in die Bolzenaufnahmeausnehmung (23) reicht, und
- eine Kaliberkörperausnehmung (26), die in Weiterführung der Symmetrieachse von der Bolzenaufnahmeausnehmung (23) über die kürzere Grundseite des Verriegelungsfußkörpers (21) hinweg wenigstens teilweise in den Kalibrierkörper (25) eingebracht ist.

7. Vorrichtung nach einem der Ansprüche 1 bis 6, **dadurch gekennzeichnet, daß** der Kalibrierkörper (25) einen Körperkopf (251,...,257) aufweist, der den Kalibrierungsaufgaben angepaßt ist und im Querschnitt rechteckförmig, T-förmig, umgekehrt T-förmig oder pilzförmig ausgebildet ist, wobei die Symmetrieachse des Körperkopfs (251,...,257) in Verlängerung oder beabstandet links oder rechts von der Symmetrieachse des Verriegelungsfußkörpers (21) angeordnet ist.

8. Vorrichtung nach einem der Ansprüche 1 bis 7, **dadurch gekennzeichnet, daß** der Kurzkaliberkörper (11) aus wenigstens zwei Kurzkaliberteilkörpern (11.1, 11.2, 11.3) besteht.

9. Vorrichtung nach einem der Ansprüche 1 bis 8, **dadurch gekennzeichnet, daß** die Kurzkaliberteilkörper (11.1, 11.2, 11.3), die Verriegelungskörper (20) und das Verriegelungsbolzenelement (22) aus einem nichtrostenden, chromhaltigen Stahl hergestellt sind.

## Claims

1. A device for short calibration for a cooling and calibration means (105) of a plant for producing hollow plastics profiles (50), which device comprises:
- a short calibre body (11);
- a profile cross-section recess (14) which is introduced into the short calibre body (11) and through which a hollow plastics profile (50) is pulled, and
- at least one calibration body (20, 22) which projects at least partially into the profile cross-section recess (14) and which at least partially grips behind the hollow plastics profile (50),
**characterised in that**
- the calibration body is formed from a locking body (20) with a slot recess (23, 26) and a locking foot body (21) and a calibration body (25) adjoining the locking foot body (21),
- that at least one locking recess (15) which is compatible with the locking foot body (21) is introduced into the short calibre body (11) from the profile cross-section recess (14), and
- that the locking foot body (21) is inserted and secured in the locking recess (15).

2. A device according to Claim 1, **characterised in that** a bolt receiving recess (23) is introduced into the locking foot body (21), into which a locking bolt element (22) can be driven.

3. A device according to Claim 2, **characterised in that** the locking bolt element (22) and the bolt receiving recess (23) are circular in cross-section.

4. A device according to Claim 2 or 3, **characterised in that** the locking bolt element (22) is designed to increase in a cone-shape from its start (22.1) to its end (22.2).

5. A device according to Claim 1, **characterised in that** the locking foot body (21) is designed as an axially symmetrical equal-sided trapezium, on the shorter base side of which the calibration body (25) is arranged.

6. A device according to one of Claims 1 to 5, **characterised in that** the slot recess comprises:
- a base slot recess (24), which extends in the axis of symmetry from the larger base side of the trapezoidal locking foot body (21) into the bolt receiving recess (23), and
- a calibre body recess (26) which in a continuation of the axis of symmetry from the bolt receiving recess (23) past the shorter base side of the locking foot body (21) is introduced at least in part into the calibration body (25).

7. A device according to one of Claims 1 to 6, **characterised in that** the calibration body (25) has a head (251, ..., 257) which is adapted to the calibration tasks and is rectangular, T-shaped, reverse T-shaped or mushroom-shaped in cross-section, the axis of symmetry of the body head (251, ..., 257) being arranged in an extension of or spaced apart to the left or right of the axis of symmetry of the locking foot body (21).

8. A device according to one of Claims 1 to 7, **characterised in that** the short calibre body (11) consists of at least two short calibre part bodies (11.1, 11.2, 11.3).

9. A device according to one of Claims 1 to 8, **characterised in that** the short calibre part bodies (11.1, 11.2, 11.3), the locking bodies (20) and the locking bolt element (22) are made from a stainless, chromium-containing steel.

## Revendications

1. Dispositif de calibrage court pour un mécanisme refroidisseur et calibreur (105) d'une installation de fabrication de profilés creux (50) en matière plastique, dispositif qui comprend :
- un corps (11) de calibre court;
- un évidement (14) à section transversale profilée qui est ménagé dans le corps (11) de calibre court et à travers lequel un profilé creux (50) en matière plastique est tiré, et
- au moins un corps de calibrage (20, 22) qui fait au moins en partie saillie dans l'évidement (14) à section transversale profilée et qui est au moins en partie au contact du profilé creux (50) en matière plastique;
**caractérisé en ce que**
- le corps de calibrage est constitué d'un corps de verrouillage (20), qui comprend un évidement (23, 26) en forme de fente et un corps (21) de pied de verrouillage, et d'un corps calibreur (25) qui se raccorde au corps (21) de pied de verrouillage,
- **en ce qu'**au moins un évidement de verrouillage (15) compatible avec le corps (21) de pied de verrouillage est ménagé dans le corps (11) de calibre court à partir de l'évidement (14) à section transversale profilée et
- **en ce que** le corps (21) de pied de verrouillage est à insérer et à fixer dans l'évidement de verrouillage (15).

2. Dispositif selon la revendication 1, **caractérisé en ce qu'**un évidement (23) de réception de cheville, dans lequel peut être enfoncé un élément de cheville (22) de verrouillage est ménagé dans le corps (21) de pied de verrouillage.

3. Dispositif selon la revendication 2, **caractérisé en ce que** l'élément de cheville (22) de verrouillage et l'évidement de réception (23) de cheville sont de configurations circulaires en coupe transversale.

4. Dispositif selon la revendication 2 ou 3, **caractérisé en ce que** l'élément de cheville (22) de verrouillage est de configuration conique croissante à partir de son début (22.1) de cheville jusqu'à son extrémité (22.2) de cheville.

5. Dispositif selon la revendication 1, **caractérisé en ce que** le corps (21) de pied de verrouillage consiste en un trapèze équilatère à symétrie axiale, sur la petite base duquel est agencé le corps calibreur (25).

6. Dispositif selon l'une quelconque des revendications 1 à 5, **caractérisé en ce que** l'évidement en forme de fente comprend :
- un évidement en forme de fente (24) de basé qui s'étend, dans l'axe de symétrie, à partir de la grande base du corps (21) trapézoïdal de pied de verrouillage jusque dans l'évidement de réception (23) de cheville, et
- un évidement (26) de corps de calibre qui est ménagé en continuation dans l'axe de symétrie, à partir de l'évidement de réception (23) de cheville, au-delà de la petite base du corps (21) de pied de verrouillage au moins en partie jusque dans le corps calibreur (25).

7. Dispositif selon l'une quelconque des revendications 1 à 6, **caractérisé en ce que** le corps calibreur (25) comprend une tête (251, ..., 257) de corps qui est adaptée aux tâches de calibrage et dont la configuration en section transversale est rectangulaire, en forme de T, en forme de T inversé, ou en forme de champignon, l'axe de symétrie de la tête (251, ..., 257) de corps étant agencé dans le prolongement de l'axe de symétrie du corps (21) de pied de verrouillage ou espacé vers la gauche ou la droite de cet axe.

8. Dispositif selon l'une quelconque des revendications 1 à 7, **caractérisé en ce que** le corps (11) de calibre court se compose d'au moins deux corps partiels (11.1, 11.2, 11.3) de calibres courts.

9. Dispositif selon l'une quelconque des revendications 1 à 8, **caractérisé en ce que** les corps (11.1, 11.2, 11.3) de calibres courts, les corps de verrouillage (20) et l'élément de cheville (22) de verrouillage sont fabriqués en acier inoxydable à teneur en chrome.
